# EUROPÄISCHE PATENTSCHRIFT

(11) **EP 4 655 521 B1**
(45) Veröffentlichungstag und Bekanntmachung des Hinweises auf die Patenterteilung: **04.11.2026**
(21) Anmeldenummer: 23838083.6
(22) Anmeldetag: 22.12.2023
(51) Int. Cl.: F16L 41/02, E03C 1/02, F16L 37/56, F16L 39/02

(54) **FLUIDISCHE UMLENKEINHEIT UND VERWENDUNG EINES SCHLAUCHS IN EINER SOLCHEN UMLENKEINHEIT**
FLUIDIC DEFLECTION UNIT AND USE OF A TUBE IN SUCH DEFLECTION UNIT
UNITÉ DE DÉVIATION FLUIDIQUE ET UTILISATION D'UN TUBE DANS UNE TELLE UNITÉ DE DÉVIATION

(30) Priorität: 23.01.2023 DE 202023100312 U
(43) Veröffentlichungstag der Anmeldung: 03.12.2025
(73) Patentinhaber: Neoperl GmbH, 79379 Müllheim (DE)
(72) Erfinder: TEMPEL, Marc, 79111 Freiburg (DE); KURY, Werner, 79379 Müllheim (DE); SCHÜRLE, Holger, 79379 Müllheim (DE); MÜNDLEIN, Jochen, 79291 Merdingen (DE)
(74) Vertreter: Mertzlufft-Paufler, Cornelius
(86) Internationale Anmeldenummer: PCT/EP2023/087643
(87) Internationale Veröffentlichungsnummer: WO 2024/156455

(56) Entgegenhaltungen:
- EP-A1- 1 978 290
- EP-A1- 2 228 582
- DE-A1- 102020 127 375
- DE-B3- 102016 205 621
- US-A- 3 654 965
- US-A- 5 630 628

## Beschreibung

Die Erfindung betrifft eine fluidische Umlenkeinheit mit einem Gehäuse, zwei Schlauchaufnahmen und einem die Schlauchaufnahmen fluidisch verbindenden Verbindungskanal. Die fluidische Umlenkeinheit kann insbesondere zur Verwendung im Sanitärbereich vorgesehen sein.

Die Erfindung betrifft weiter die Verwendung eines Schlauches zur Unterbrechung einer fluidischen Verbindung in einer erfindungsgemäßen fluidischen Umlenkeinheit.

Derartige Umlenkeinheiten sind bekannt und dienen dazu, zwei Schläuche miteinander zu verbinden und hierbei eine Änderung der Strömungsrichtung des Fluids zu erzeugen.

Aus der DE 10 2020 127375 A1 ist eine Verwendung eines Schlauchs zur fluidischen Verbindung eines Auslaufstücks mit einem Ventil an einer Sanitärarmatur bekannt, wobei das Auslaufstück mit der Sanitärarmatur fest verbindbar ist, wobei sich der Schlauch zwischen dem Auslaufstück und seinem ventilseitigen Ende in einem Abschnitt außerhalb eines Gehäuses der Sanitärarmatur erstreckt.

Der Erfindung liegt die Aufgabe zugrunde, die Fertigung, Montage und Verwendung derartiger Umlenkeinheiten zu vereinfachen.

Zur Lösung der genannten Aufgabe sind erfindungsgemäß die Merkmale des Anspruchs 1 vorgesehen. Insbesondere wird somit zur Lösung der genannten Aufgabe bei fluidischen Umlenkeinheiten der eingangs beschriebenen Art erfindungsgemäß vorgeschlagen, dass die Schlauchaufnahmen jenseits des Verbindungskanals fluidisch miteinander verbunden sind.

Somit ist eine zu dem Verbindungskanal separate fluidische Verbindung der Schlauchaufnahmen ausgebildet. Diese fluidische Verbindung ist zumindest und insbesondere nur dann gegeben, wenn in die Schlauchaufnahme kein Schlauch eingeführt ist. Vorzugsweise wird diese fluidische Verbindung bereits durch Einführen nur eines Schlauches unterbrochen.

Hierbei kann vorgesehen sein, dass die Schlauchaufnahmen in wenigstens einem Axialabschnitt jenseits des Verbindungskanals fluidisch miteinander verbunden sind. Alternativ oder zusätzlich hierzu kann vorgesehen sein, dass die Schlauchaufnahmen einerseits und der Verbindungskanal andererseits so angeordnet sind, dass sie durch eine Ebene trennbar sind. Die fluidische Umlenkeinheit ist dazu ausgelegt, in Montagestellung mit zwei eingeführten Schläuchen verwendet zu werden.

Auf diese Weise lässt sich die Fertigung und Montage fluidischer Umlenkeinheiten vereinfachen. Fluidische Umlenkeinheiten können auf diese Weise hinterschnittfrei ausgeführt werden, was die Fertigung und Montage weiter vereinfacht.

Bei einer vorteilhaften Ausgestaltung kann vorgesehen sein, dass die fluidische Umlenkeinheit ein einstückiges Gehäuse aufweist.

Bei hinterschnittfreier Fertigung der fluidischen Umlenkeinheit sind eine mehrteilige Ausführung mit nachgelagertem Zusammensetzen des Gehäuses verzichtbar. Eine einstückige Fertigung ist somit möglich und vereinfacht den Fertigungs- und Montageprozess.

Gemäß einer ersten erfindungsgemäßen Ausführungsform ist vorgesehen, dass ein in beiden Schlauchaufnahmen wirkendes Dichtelement zumindest teilweise die fluidische Verbindung ausfüllt. Alternativ oder zusätzlich ist bei einer zweiten erfindungsgemäßen Ausführungsform vorgesehen, dass das Dichtelement aus zwei miteinander verbundenen Ringen besteht. Hierbei kann es sich beispielsweise um O-Ringe, X-Ringe und/oder Ringe mit einer rechteckigen Querschnittsfläche handeln. Die Ringe können über einen Verbindungssteg miteinander verbunden sein. Als Verbindungssteg kann hierbei insbesondere der einstückig mit den Ringen verbundene, außerhalb der jeweiligen Außenkreisumfänge der Ringe befindliche Bereich angesehen werden. Dieser Verbindungssteg ist bevorzugt an die fluidische Umlenkeinheit angepasst, so dass er die fluidische Verbindung derart zumindest teilweise ausfüllt, dass eine optimale Abdichtung erzielt wird.

Es ist somit lediglich ein einziges Dichtelement zur Abdichtung beider Schlauchaufnahmen notwendig. Das Dichtelement ist hierbei zum Ausfüllen eines Raumes zwischen einem einzusteckenden, d.h. in Montagestellung der fluidischen Umlenkeinheit eingesteckten, Schlauch und dem Gehäuse der fluidischen Umlenkeinheit vorgesehen. Gleichzeitig ist ein zwischen den in Montagestellung eingeführten Schläuchen vorhandener Zwischenraum ausfüll- und abdichtbar.

Bei einer vorteilhaften Ausgestaltung kann vorgesehen sein, dass die Schlauchaufnahmen über ihren gesamten Verlauf in Axialrichtung fluidisch miteinander verbunden sind.

Hierbei kann insbesondere als Verlauf der Schlauchaufnahmen ein Gehäuseabschnitt angesehen werden, in dem eine jeweilige Schlauchaufnahme einen konstanten Durchmesser aufweist. Als einzelne der beiden verbundenen Schlauchaufnahmen kann beispielsweise jeweils ein zylinderförmiger Abschnitt angesehen werden. Sind die jeweiligen Schlauchaufnahmen über ihren gesamten Verlauf in Axialrichtung fluidisch miteinander verbunden, ergibt sich eine besondere Vereinfachung der Fertigung der fluidischen Umlenkeinheit.

Bei einer vorteilhaften Ausgestaltung kann vorgesehen sein, dass eine die Schlauchaufnahmen fluidisch verbindende fluidische Verbindung, beispielsweise die bereits erwähnte fluidische Verbindung, und der Verbindungskanal einen gemeinsamen Innenraum des Gehäuses bilden. Somit ist der Innenraum bei der Herstellung mit einem einfachen Werkzeug ausfüllbar. Bevorzugt ist dieser Innenraum im mathematischen Sinne einfach zusammenhängend. Somit ist eine einstückige Ausbildung besonders einfach hinterschnittfrei herstellbar.

Bei einer vorteilhaften Ausgestaltung kann vorgesehen sein, dass jeweilige Längsachsen der Schlauchaufnahmen parallel zu jeweiligen Längsachsen von Öffnungen an den Enden des Verbindungskanals ausgerichtet sind. Zusätzlich kann vorgesehen sein, das jeweilige Längsachsen der Schlauchaufnahmen deckungsgleich zu jeweiligen Längsachsen von den Öffnungen des Verbindungskanals ausgerichtet sind.

Auf diese Weise lässt sich eine optimale Ausrichtung der Schläuche zu den Öffnungen des Verbindungskanals erreichen. Hiermit sind auch vorteilhafte Strömungseigenschaften besonders im Bereich der fluidischen Richtungsumkehr erzielbar.

Bei einer vorteilhaften Ausgestaltung kann vorgesehen sein, dass ein Manschettenteil in das Gehäuse eingesetzt ist und zur axialen Führung eines in die Schlauchaufnahme einsteckbaren Schlauches ausgeführt ist. Zusätzlich hierzu kann vorgesehen sein, dass das Manschettenteil in eine oder die Schlauchaufnahmen eingesetzt ist. Alternativ oder zusätzlich hierzu kann vorgesehen sein, dass das Manschettenteil mit dem Gehäuse verrastbar oder verrastet ist.

Auf diese Weise können radial wirkende Kräfte, welche beispielsweise durch ein Biegen des Schlauches eingebracht werden können, durch das Manschettenteil aufgenommen werden. So kann verhindert werden, dass die radial bzw. quer zur Einsteckrichtung wirkenden Kräfte das Dichtelement derart beaufschlagen, dass die Dichtwirkung vermindert wird. Besonders vorteilhaft ist es, wenn die Größe von Schlauchdurchführungen durch das Manschettenteil auf die einzusteckenden Schläuche derart angepasst ist, dass die Anlagefläche des Schlauches an dem Manschettenteil etwa der äußeren Umfangsfläche des Schlauches entspricht. So lässt sich der jeweilige Schlauch optimal führen und die Aufnahme von quer zur Einsteckrichtung wirkenden Kräften durch die fluidische Umlenkeinheit wird erleichtert.

Bei einer vorteilhaften Ausgestaltung kann vorgesehen sein, dass das Manschettenteil wenigstens eine Verrastungsnocke aufweist. Zusätzlich kann vorgesehen sein, dass das Manschettenteil wenigstens eine Verrastungsnocke und bevorzugt zwei gegenüberliegende Verrastungsnocken je Schlauchaufnahme aufweist.

Auf diese Weise kann eine einfache Verrastungsmöglichkeit für das Manschettenteils realisiert werden, sodass dieses sicher fixiert werden kann.

Bei einer vorteilhaften Ausgestaltung kann vorgesehen sein, dass die wenigstens eine Verrastungsnocke mit einer passend gestalteten Aufnahmeöffnung des Gehäuses derart wirken kann, dass das Manschettenteil mit dem Gehäuse verrastbar ist.

Somit kann das Manschettenteil sicher an dem Gehäuse fixiert werden. Das Manschettenteil kann beispielsweise als abschließendes Teil die im Inneren des Gehäuses liegenden, weiteren Teile an deren Ort fixieren und vor Herausfallen oder Herabfallen schützen.

Bei einer vorteilhaften Ausgestaltung kann vorgesehen sein, dass das Manschettenteil wenigstens ein Halteteil umfasst, welches Halteteil auf einen in die Schlauchaufnahme einsteckbaren Schlauch aufsteckbar und in eine Halteteilaufnahme des Manschettenteils einsteckbar ist. Zusätzlich kann vorgesehen sein, dass das Halteteil in einer Halteteilaufnahme des Manschettenteils verrastbar ist.

Auf diese Weise lässt sich eine noch bessere Führung der einzusteckenden Schläuche erreichen. Die Schläuche können auch zusätzlich gegen ein Herausziehen gesichert werden.

Bei einer vorteilhaften Ausgestaltung kann vorgesehen sein, dass das Halteteil eine Aufnahmeöffnung für einen Schlauch aufweist und in Umfangsrichtung vollständig umschließt.

Der Schlauch ist somit in dem Halteteil aufnehmbar, wobei die Aufnahmeöffnung und somit der Schlauch in Umfangsrichtung vollständig umschlossen sind. Somit werden die Führung des Schlauches und die Aufnahme von quer wirkenden Kräften durch die fluidische Umlenkeinheit verbessert.

Bei einer vorteilhaften Ausgestaltung kann vorgesehen sein, dass ein oder das Dichtelement in das Gehäuse eingesetzt ist und zur außenseitigen Abdichtung zweier in die Schlauchaufnahmen einsteckbarer Schläuche ausgeführt ist. Zusätzlich kann vorgesehen sein, dass das Dichtelement in Form zweier miteinander verbundener Ringe ausgeführt ist. Hierbei kann es sich beispielsweise um O-Ringe, X-Ringe und/oder Ringe mit einer rechteckigen Querschnittsfläche handeln. Alternativ oder zusätzlich hierzu kann vorgesehen sein, dass das Dichtelement benachbart zu einem oder dem Manschettenteil angeordnet ist.

Das Dichtelement kann somit optimal an die einzusetzenden Schläuche angepasst sein. Das Dichtelement kann außerdem durch das Manschettenteil relativ zu dem Gehäuse der fluidischen Umlenkeinheit fixiert sein. Beispielsweise können auch mehrere Dichtelemente übereinander angeordnet sein.

Bei einer vorteilhaften Ausgestaltung kann vorgesehen sein, dass ein Einlegeteil in das Gehäuse eingesetzt ist und eine ebene Auflagefläche quer zur Richtung einer Längsachse einer Schlauchaufnahme an deren einer Gehäuseöffnung abgewandten Seite bildet. Zusätzlich kann vorgesehen sein, dass das Einlegeteil benachbart zu einem oder dem Dichtelement angeordnet ist.

Auf diese Weise kann das Dichtelement zu seinen beiden Seiten zwischen Manschettenteil und Halteteil relativ zum Gehäuse fixiert sein. Außerdem ist durch das Einlegeteil ein verbleibender Raum der Schlauchaufnahme ausfüllbar, so dass ein Freiraum bei eingesteckten Schläuchen vermindert werden kann. Somit kann der dem durchfließenden Fluid zur Verfügung stehende Raum verkleinert werden. So kann die Bildung von Luftblasen in diesem Freiraum verhindert werden, was ein Nachlaufen einer abgeschalteten Armatur zur Folge hätte. Ferner kann die seitliche bzw. radiale Stabilisierung und Führung eines eingesteckten Schlauches verbessert werden. Die Stabilisierung und Führung des Schlauches wird mit zunehmender Einstecktiefe des Schlauches vergrößert.

Bei einer vorteilhaften Ausgestaltung kann vorgesehen sein, dass ein Halteelement an einem einer Gehäuseöffnung gewandten Seite einer Schlauchaufnahme zum Fixieren eines in die Schlauchaufnahme einsteckbaren Schlauches ausgebildet ist. Zusätzlich kann vorgesehen sein, dass das Halteelement aus wenigstens einem Zackenring besteht. Alternativ oder zusätzlich hierzu kann vorgesehen sein, dass das Halteelement in Form eines Einlegeteils ausgeführt ist. Alternativ oder zusätzlich kann vorgesehen sein, dass benachbart zu dem Halteelement ein Widerlager für das Halteelement ausgebildet ist. Bei dem Widerlager kann es sich um das Einlegeteil handeln.

Auf diese Weise lassen sich die einzusteckenden Schläuche vorteilhaft in der fluidischen Umlenkeinheit fixieren. Mittels des Halteelements kann ein einzusteckender Schlauch mit einer in axialer Richtung des Schlauches wirkenden Kraft beaufschlagt werden, insbesondere welche Kraft einem Herausziehen des Schlauches entgegenwirkt. Die einzusteckenden Schläuche können je nach Anforderungen in einem einer Gehäuseöffnung zugewandten Bereich oder einem einer Gehäuseöffnung abgewandten Bereich, insbesondere jeweils auf ein Dichtelement bezogen, fixiert sein.

Bei einer vorteilhaften Ausgestaltung kann vorgesehen sein, dass das Manschettenteil und/oder das Halteteil und/oder das Einlegeteil und/oder das Halteelement einstückig für beide Schlauchaufnahmen ausgeführt ist/sind. Alternativ oder zusätzlich kann vorgesehen sein, dass eines oder mehrere der genannten Teile zumindest teilweise die fluidische Verbindung ausfüllt/ausfüllen.

Die Fertigung der genannten Teile kann auf diese Weise vereinfacht werden. Dies gilt ebenso für das Zusammensetzen der fluidischen Umlenkeinheit bzw. deren Montage an den Schläuchen.

Bei einer vorteilhaften Ausgestaltung kann vorgesehen sein, dass das Manschettenteil und/oder das Halteteil und/oder das Einlegeteil und/oder das Halteelement für jede Schlauchaufnahme separat ausgeführt ist/sind.

Hierbei ist bei einer fluidischen Umlenkeinheit auch eine Kombination von separat und einstückig ausgeführten Teilen möglich.

Bei einer vorteilhaften Ausgestaltung kann vorgesehen sein, dass das Gehäuse außenseitig wenigstens eine Verstärkungsrippe aufweist. Bevorzugt kann es sich hierbei um drei Verstärkungsrippen handeln. Hierbei kann vorgesehen sein, dass eine oder die Verstärkungsrippen quer zu einer Einsteckrichtung eines Schlauches verlaufen.

Durch die fluidische Verbindung einer Schlauchaufnahme in axialer Richtung kann eine Trennwand zwischen den Schlauchaufnahmen verzichtbar sein. Hierbei ist es möglich, dass durch Weglassen der Trennwand eine Instabilität der fluidischen Umlenkeinheit bzw. ihres Gehäuses auftritt. Diese Instabilität kann durch die Ausbildung mindestens einer Verstärkungsrippe aufgewogen und wiederhergestellt werden. Durch die Ausführung von Verstärkungsrippen kann die Stabilität des Gehäuses somit vergrößert werden.

Bei einer Ausgestaltung kann vorgesehen sein, dass ein Füllvorsprung ausgebildet, der zu dem Verbindungskanal abragt. Von Vorteil ist dabei, dass Totraum, in dem Wasser im Gebrauch nicht oder nicht vollständig ausgespült wird, vermindert werden kann. Beispielsweise kann vorgesehen sein, dass der Füllvorsprung einen Zwischenraum zwischen Enden der eingesteckten Schläuche zumindest teilweise ausfüllt. Eine Höhe des Füllvorsprungs kann beispielsweise ein Vielfaches einer Materialdicke eines Trägers, beispielsweise des bereits erwähnten Einlegeteils, sein.

Beispielsweise kann der Füllvorsprung an eine, beispielsweise dem bereits erwähnten, Einlegeteil ausgebildet sein. Somit ist der Totraum besonders einfach reduzierbar.

Alternativ oder zusätzlich sind zur Lösung der genannten Aufgabe erfindungsgemäß die Merkmale des nebengeordneten, auf die Verwendung eines Schlauches zur Unterbrechung einer fluidischen Verbindung in einer fluidischen Umlenkeinheit wie zuvor beschrieben gerichteten Anspruchs vorgesehen. Insbesondere wird somit zur Lösung der genannten Aufgabe bei Verwendungen der eingangs beschriebenen Art erfindungsgemäß vorgeschlagen, dass der Schlauch in eine Schlauchaufnahme eingesteckt wird, in die die fluidische Verbindung mündet. Zusätzlich kann vorgesehen sein, dass hierbei der Verbindungskanal weiterhin geöffnet ist.

Auf diese Weise können die Vorteile erfindungsgemäßer fluidischer Umlenkeinheiten bei Verwendungen wie zuvor beschrieben genutzt werden. Dadurch, dass ein Schlauch eine fluidische Verbindung in einer fluidischen Umlenkeinheit unterbricht, kann beispielsweise eine Trennwand innerhalb der fluidischen Umlenkeinheit verzichtbar sein. Auf diese Weise kann eine vereinfachte und bevorzugt einstückige Fertigung der fluidischen Umlenkeinheit erfolgen. Die unterbrochene fluidische Verbindung ist hierbei insbesondere die zuvor beschriebene Verbindung zwischen zwei Schlauchaufnahmen der fluidischen Umlenkeinheit. Zusätzlich hierzu kann weiterhin ein Verbindungskanal, insbesondere der bereits beschriebene Verbindungskanal, weiterhin geöffnet bleiben.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigen:
- Fig. 1: eine erfindungsgemäße fluidische Umlenkeinheit mit zwei in diese eingesteckten Schlauchenden in einer perspektivischen Ansicht,
- Fig. 2: ein weitere erfindungsgemäße fluidische Umlenkeinheit mit zwei in diese eingesteckten Schlauchenden in einer perspektivischen Ansicht,
- Fig. 3: eine Schnittansicht einer erfindungsgemäßen fluidischen Umlenkeinheit gemäß Figur 1,
- Fig. 4: eine Schnittansicht einer erfindungsgemäßen fluidischen Umlenkeinheit gemäß Figur 2,
- Fig. 5: eine Schnittansicht einer weiteren erfindungsgemäßen fluidischen Umlenkeinheit gemäß Figur 1,
- Fig. 6: eine weitere Schnittansicht der in den Figuren 3 bis 5 dargestellten fluidischen Umlenkeinheiten,
- Fig. 7: die in Figur 3 dargestellte fluidische Umlenkeinheit in einer Explosionsdarstellung,
- Fig. 8: die in Figur 4 dargestellte fluidische Umlenkeinheit in einer Explosionsdarstellung und
- Fig. 9: die in Figur 5 dargestellte fluidische Umlenkeinheit in einer Explosionsdarstellung.

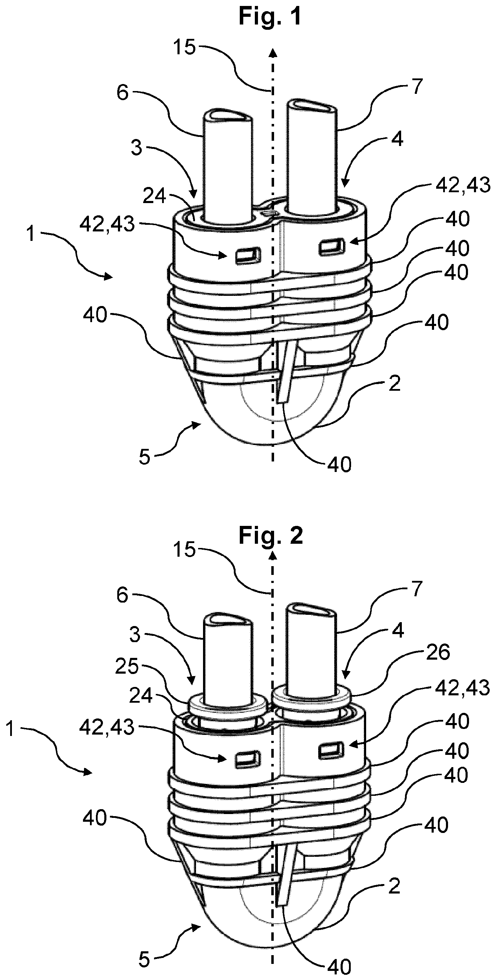

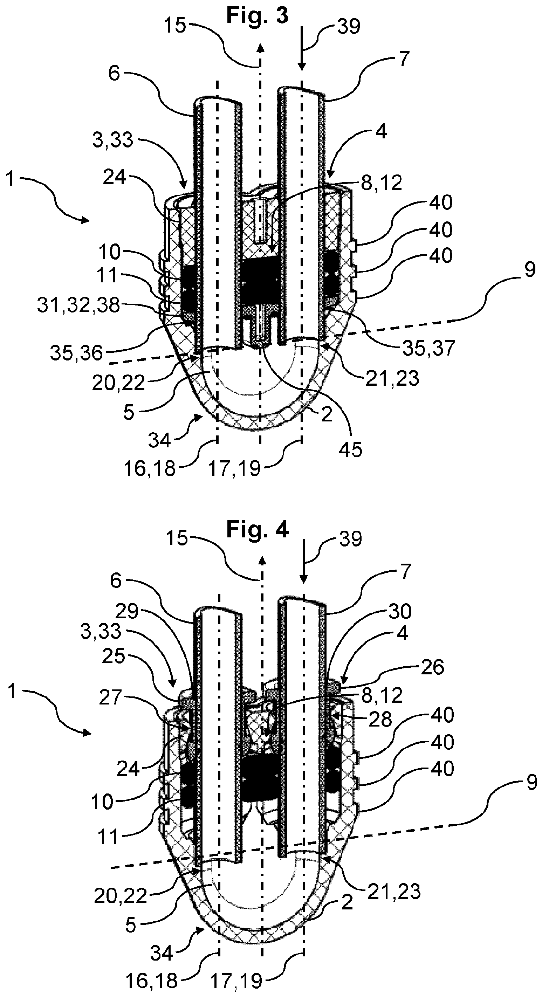

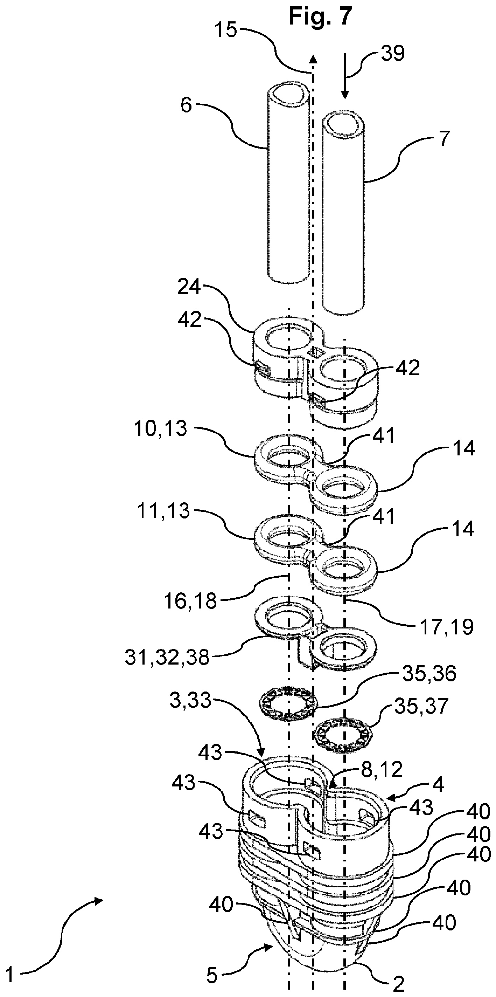

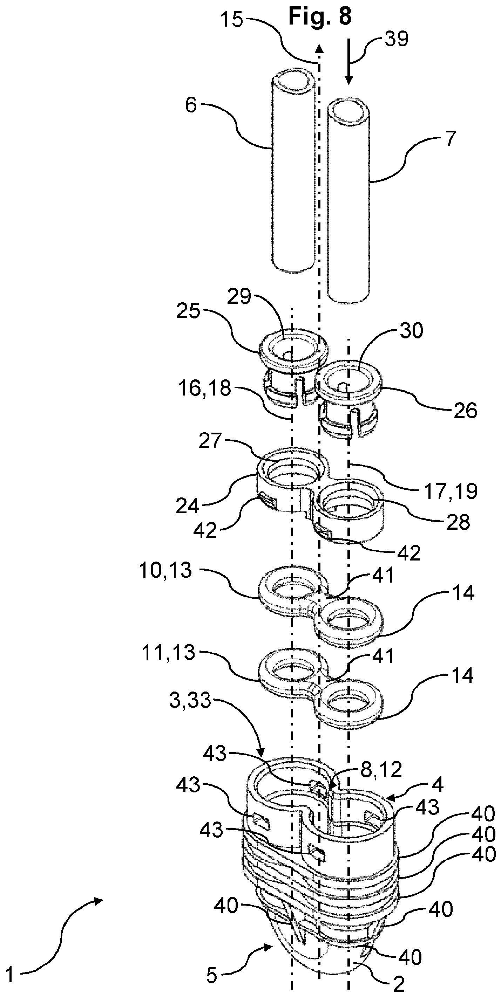

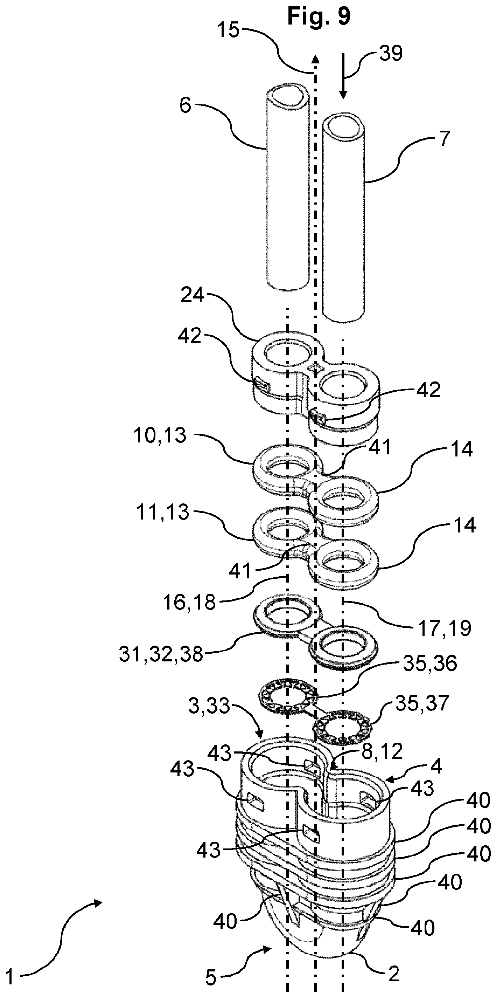

In den Figuren sind drei Ausführungsbeispiele einer erfindungsgemäßen fluidischen Umlenkeinheit 1 gezeigt. Die perspektivische Außenansicht zweier Ausführungsbeispiele ist hierbei identisch und in Figur 1 gezeigt. Diese gehört zu den Ausführungsbeispielen der Figuren 3 und 7 sowie der Figuren 5 und 9. Figur 2 zeigt die Außenansicht eines weiteren Ausführungsbeispiels, welches auch in den Figuren 4 und 8 gezeigt ist. Die Ausführungsbeispiele werden im Folgenden gemeinsam beschrieben.

Die fluidische Umlenkeinheit 1 ist zur Verwendung im Sanitärbereich geeignet. Die fluidische Umlenkeinheit 1 weist ein Gehäuse 2, Schlauchaufnahmen 3, 4 und einen die Schlauchaufnahmen 3, 4 fluidisch verbindenden Verbindungskanal 5 auf. In die Schlauchaufnahmen 3, 4 ist jeweils ein Schlauch 6, 7 eingesteckt.

Insbesondere in den Schnittdarstellungen der Figuren 3 bis 5 ist erkennbar, dass die Schlauchaufnahmen 3, 4 jeweils in wenigstens einem Axialabschnitt 8 jenseits des Verbindungskanals 5 fluidisch miteinander verbunden sind. Ferner sind die Schlauchaufnahmen 3, 4 einerseits und der Verbindungskanal 5 andererseits so angeordnet, dass sie durch eine Ebene 9 trennbar sind. In den Ausführungsbeispielen weist die fluidische Umlenkeinheit 1 ein einstückiges Gehäuse 2 auf.

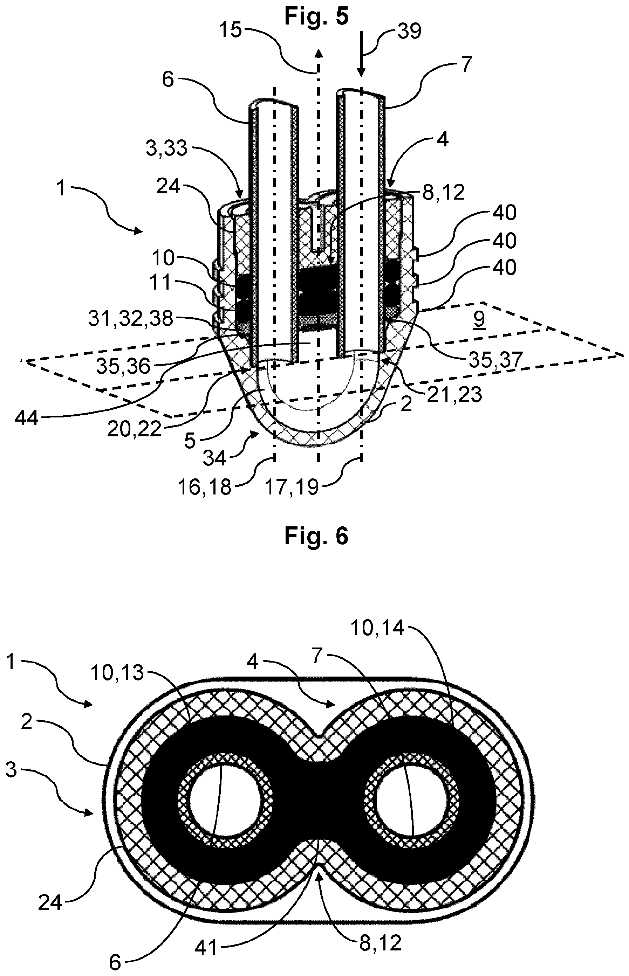

In allen Ausführungsbeispielen ist wenigstens ein, nämlich zwei in beiden Schlauchaufnahmen 3, 4 wirkende Dichtelemente 10, 11 vorgesehen. Dieses Dichtelement 10, 11 füllt zumindest teilweise die fluidische Verbindung 12, welche zwischen den Schlauchaufnahmen 3, 4 ausgeführt ist, aus und besteht aus zwei miteinander verbindenden Ringen 13, 14, wie in Figur 6 ersichtlich ist. Bei den Ringen 13, 14 handelt es sich hier um O-Ringe. In einer nicht gezeigten Ausführungsform kann es sich bei den Ringen 13, 14 auch um X-Ringe und/oder Ringe mit einer rechteckigen Querschnittsfläche handeln. Die Ringe 13, 14 sind über einen Verbindungssteg 41 miteinander verbunden. In analoger Weise können weitere, in beiden Schlauchaufnahmen 3, 4 eingesetzte Teile über einen jeweiligen Verbindungssteg verbunden sein. Die Schlauchaufnahmen 3, 4 sind über ihren gesamten Verlauf in Axialrichtung 15 fluidisch miteinander verbunden. Hierbei wird die fluidische Verbindung 12 gebildet.

Jeweilige Längsachsen 16, 17 der Schlauchaufnahmen 3, 4 sind hierbei parallel, und zwar sogar deckungsgleich, zu jeweiligen Längsachsen 18, 19 von Öffnungen 20, 21 an den Enden 22, 23 des Verbindungskanals 5 ausgerichtet.

Die fluidischen Umlenkeinheiten 1 verfügen ferner jeweils über ein Manschettenteil 24, welches in das Gehäuse 2 und zwar in die Schlauchaufnahmen 3, 4 eingesetzt ist und zur axialen Führung eines in die Schlauchaufnahmen 3, 4 einsteckbaren Schlauches 6, 7 ausgeführt ist. Das Manschettenteil 24 ist mit dem Gehäuse 2 verrastbar. Hierzu weist das Manschettenteil 24 wenigstens eine, nämlich wenigstens eine je Schlauchaufnahme 3, 4, und zwar zwei gegenüberliegende, Verrastungsnocken 42 je Schlauchaufnahme 3, 4 auf. Die wenigstens eine, und zwar jede Verrastungsnocke 42 kann mit einer passend gestalteten Aufnahmeöffnung 43 des Gehäuses 2 derart wirken, dass das Manschettenteil 24 mit dem Gehäuse 2 verrastbar ist. Das Manschettenteil 24 ist in den Ausführungsbeispielen einstückig für beide Schlauchaufnahmen 3, 4 ausgeführt und kann in einer nicht gezeigten Ausführungsform für jede Schlauchaufnahme 3, 4 separat ausgeführt sein. Das Manschettenteil 24 füllt zumindest teilweise die fluidische Verbindung 12 aus.

Die fluidische Umlenkeinheit 1 des in den Figuren 2, 4 und 8 gezeigten Ausführungsbeispiels verfügt über ein Manschettenteil 24, welches wenigstens ein Halteteil, nämlich zwei Halteteile 25, 26 umfasst. Das Halteteil 25, 26 ist jeweils auf einen in die Schlauchaufnahme 3, 4 einsteckbaren Schlauch 6, 7 aufsteckbar und jeweils in einer Halteteilaufnahme 27, 28 des Manschettenteils 24 einsteckbar und außerdem in dieser Halteteilaufnahme 27, 28 verrastbar. Das Halteteil 25, 26 weist jeweils eine Aufnahmeöffnung 29, 30 für einen Schlauch 6, 7 auf und umschließt diese in Umfangsrichtung vollständig.

Die jeweiligen Dichtelemente 10, 11 sind in den Ausführungsbeispielen in Form zweier miteinander verbundener Ringe 13, 14 ausgeführt und benachbart zu jeweiligen Manschettenteilen 24 in das Gehäuse 2 eingesetzt und zur außenseitigen Abdichtung zweier in die Schlauchaufnahmen 3, 4 einsteckbarer Schläuche 6, 7 ausgeführt.

Die fluidischen Umlenkeinheiten 1 der Ausführungsbeispiele der Figuren 1, 3 und 7 sowie 1, 5 und 9 verfügen jeweils über ein Einlegeteil 31, welches benachbart zu den jeweiligen Dichtelementen 11 angeordnet ist, und in das Gehäuse 2 eingesetzt ist. Das Einlegteil 31 bildet eine ebene Auflagefläche 32 quer zur Richtung einer Längsachse 16, 17 einer Schlauchaufnahme 3, 4 an deren einer Gehäuseöffnung 33 abgewandten Seite 34.

Das in den Figuren 1, 5 und 9 gezeigte Ausführungsbeispiel einer fluidischen Umlenkeinheit 1 weist ein Halteelement 35, welches aus wenigstens einem, nämlich zwei Zackenringen 36, 37 besteht, an einem einer Gehäuseöffnung 33 abgewandten Seite 34 einer Schlauchaufnahme 3, 4 zum Fixieren eines in die Schlauchaufnahme 3, 4 einsteckbaren Schlauches 6, 7 auf. Das Halteelement 35 ist für beide Schlauchaufnahmen 3, 4 einstückig und ebenfalls in Form von Zackenringen 36, 37 ausgeführt und füllt zumindest teilweise die fluidische Verbindung 12 aus. In beiden Fällen ist benachbart zu dem Halteelement 35 jeweils ein Widerlager 38 für das Halteelement 35 ausgebildet, und zwar in Form des Einlegeteils 31.

Das in Figur 4 gezeigte Ausführungsbeispiel einer fluidischen Umlenkeinheit 1 verfügt über zwei separat für jede Schlauchaufnahme 3, 4 ausgeführte Halteteile 25, 26, welche in einem nicht gezeigten Ausführungsbeispiel einstückig für beide Schlauchaufnahmen 3, 4 ausgeführt sein können. Die gezeigten Halteteile 25, 26 füllen jeweils zumindest teilweise die fluidische Verbindung 12 aus.

Die Ausführungsbeispiele der Figuren 1, 3 und 5 weisen jeweils für beide Schlauchaufnahmen 3, 4 einstückig ausgeführte Einlegeteile 31 auf, welche zumindest teilweise die fluidische Verbindung 12 ausfüllen. In einem nicht gezeigten Ausführungsbeispiel kann das Einlegeteil 31 separat für jede Schlauchaufnahme 3, 4 ausgeführt sein.

In allen Ausführungsbeispielen weist das Gehäuse 2 der fluidischen Umlenkeinheit 1 außenseitig wenigstens eine, und zwar drei quer zu einer Einsteckrichtung 39 eines Schlauches 3, 4 verlaufende Verstärkungsrippen 40 auf. Weitere Verstärkungsrippen 40 an dem Gehäuse sind teilweise in Axialrichtung 15 ausgerichtet bzw. gegen diese geneigt.

Bei den gezeigten Ausführungsbeispielen fluidischer Umlenkeinheiten 1 ist bei eingesteckten Schläuchen 6, 7 auch eine erfindungsgemäße Verwendung eines Schlauches 6, 7 zur Unterbrechung einer fluidischen Verbindung 12 in einer fluidischen Umlenkeinheit 1 realisiert, wobei der Schlauch 6, 7 in eine Schlauchaufnahme 3, 4 eingesteckt wird, in die die fluidische Verbindung 12 mündet, und wobei der Verbindungskanal 5 weiterhin geöffnet ist.

Die fluidische Verbindung 12, die die Schlauchaufnahmen 3, 4 fluidisch verbindet, bildet mit dem Verbindungskanal 5 einen gemeinsamen Innenraum 44 des Gehäuses 2.

In Figur 3 ist an dem Einlegeteil 31 ein Füllvorsprung 45 ausgebildet, der zu dem Verbindungskanal 5 abragt und einen Zwischenraum zwischen den Enden der eingesteckten Schläuche 6, 7 ausfüllt. Somit kann Totraum, in dem Wasser im Gebrauch nicht oder nicht vollständig ausgespült wird, vermindert werden.

Es wird somit eine fluidische Umlenkeinheit 1 vorgeschlagen, welche insbesondere zur Verwendung im Sanitärbereich geeignet ist. Die fluidische Umlenkeinheit 1 verfügt hierbei über ein Gehäuse 2, zwei Schlauchaufnahmen 3, 4 und einen die Schlauchaufnahmen 3, 4 fluidisch verbindenden Verbindungskanal 5. Hierbei sind die Schlauchaufnahmen 3, 4, insbesondere in wenigstens einem Axialabschnitt 8, jenseits des Verbindungskanals 5 fluidisch miteinander verbunden, insbesondere wobei die Schlauchaufnahmen 3, 4 einerseits und der Verbindungskanal 5 andererseits so angeordnet sind, dass sie durch eine Ebene 9 trennbar sind. Ferner wird die Verwendung eines Schlauches 6, 7 zur Unterbrechung einer fluidischen Verbindung 12 in einer erfindungsgemäßen fluidischen Umlenkeinheit 1 vorgeschlagen, wobei der Schlauch 6, 7 in eine Schlauchaufnahme 3, 4 eingesteckt wird, in die die fluidische Verbindung 12 mündet, insbesondere wobei der Verbindungskanal 5 weiterhin geöffnet ist.

### Bezugszeichenliste

- 1: fluidische Umlenkeinheit
- 2: Gehäuse
- 3: Schlauchaufnahme
- 4: Schlauchaufnahme
- 5: Verbindungskanal
- 6: Schlauch
- 7: Schlauch
- 8: Axialabschnitt
- 9: Ebene
- 10: Dichtelement
- 11: Dichtelement
- 12: fluidische Verbindung
- 13: Ring
- 14: Ring
- 15: Axialrichtung
- 16: Längsachse
- 17: Längsachse
- 18: Längsachse
- 19: Längsachse
- 20: Öffnung
- 21: Öffnung
- 22: Ende
- 23: Ende
- 24: Manschettenteil
- 25: Halteteil
- 26: Halteteil
- 27: Halteteilaufnahme
- 28: Halteteilaufnahme
- 29: Aufnahmeöffnung
- 30: Aufnahmeöffnung
- 31: Einlegeteil
- 32: Auflagefläche
- 33: Gehäuseöffnung
- 34: Seite
- 35: Halteelement
- 36: Zackenring
- 37: Zackenring
- 38: Widerlager
- 39: Einsteckrichtung
- 40: Verstärkungsrippe
- 41: Verbindungssteg
- 42: Verrastungsnocke
- 43: Öffnung
- 44: Innenraum
- 45: Füllvorsprung

## Patentansprüche

1. Fluidische Umlenkeinheit (1), insbesondere zur Verwendung im Sanitärbereich, mit einem Gehäuse (2), zwei Schlauchaufnahmen (3, 4) und einem die Schlauchaufnahmen (3, 4) fluidisch verbindenden Verbindungskanal (5), wobei die Schlauchaufnahmen (3, 4), insbesondere in wenigstens einem Axialabschnitt (8), jenseits des Verbindungskanals (5) fluidisch miteinander verbunden sind, insbesondere wobei die Schlauchaufnahmen (3, 4) einerseits und der Verbindungskanal (5) andererseits so angeordnet sind, dass sie durch eine Ebene (9) trennbar sind, **dadurch gekennzeichnet, dass** ein in beiden Schlauchaufnahmen (3, 4) wirkendes Dichtelement (10, 11) zumindest teilweise die fluidische Verbindung (12) ausfüllt und/oder aus zwei miteinander verbundenen Ringen (13, 14) besteht.

2. Fluidische Umlenkeinheit (1) nach dem vorangehenden Anspruch, **dadurch gekennzeichnet, dass** die fluidische Umlenkeinheit (1) ein einstückiges Gehäuse (2) aufweist.

3. Fluidische Umlenkeinheit (1) nach einem der vorangehenden Ansprüche, **dadurch gekennzeichnet, dass** die Schlauchaufnahmen (3, 4) über ihren gesamten Verlauf in Axialrichtung (15) fluidisch miteinander verbunden sind und/oder dass die oder eine die Schlauchaufnahmen (3, 4) fluidisch verbindende fluidische Verbindung (12) und der Verbindungskanal (5) einen gemeinsamen Innenraum des Gehäuses (2) bilden.

4. Fluidische Umlenkeinheit (1) nach einem der vorangehenden Ansprüche, **dadurch gekennzeichnet, dass** jeweilige Längsachsen (16, 17) der Schlauchaufnahmen (3, 4) parallel, insbesondere deckungsgleich, zu jeweiligen Längsachsen (18, 19) von Öffnungen (20, 21) an den Enden des Verbindungskanals (5) ausgerichtet sind.

5. Fluidische Umlenkeinheit (1) nach einem der vorangehenden Ansprüche, **dadurch gekennzeichnet, dass** ein Manschettenteil (24) in das Gehäuse (2), insbesondere in eine oder die Schlauchaufnahmen (3, 4), eingesetzt ist und zur axialen Führung eines in die Schlauchaufnahme (3, 4) einsteckbaren Schlauches (6, 7) ausgeführt ist, insbesondere wobei das Manschettenteil (24) mit dem Gehäuse (2) verrastbar oder verrastet ist, insbesondere wobei das Manschettenteil (24) für jede Schlauchaufnahme (3, 4) separat oder einstückig für beide Schlauchaufnahmen (3, 4) ausgeführt ist und/oder zumindest teilweise die fluidische Verbindung (12) ausfüllt.

6. Fluidische Umlenkeinheit (1) nach Anspruch 5, **dadurch gekennzeichnet, dass** das Manschettenteil (24) wenigstens eine Verrastungsnocke (42), insbesondere wenigstens eine, bevorzugt zwei gegenüberliegende Verrastungsnocken (42) je Schlauchaufnahme (3, 4), aufweist.

7. Fluidische Umlenkeinheit (1) nach Anspruch 6, **dadurch gekennzeichnet, dass** die wenigstens eine Verrastungsnocke (42) mit einer passend gestalteten Aufnahmeöffnung (43) des Gehäuses (2) derart wirken kann, dass das Manschettenteil (24) mit dem Gehäuse (2) verrastbar ist.

8. Fluidische Umlenkeinheit (1) nach einem der Ansprüche 5 bis 7, **dadurch gekennzeichnet, dass** das Manschettenteil (24) wenigstens ein Halteteil (25, 26) umfasst, welches Halteteil (25, 26) auf einen in die Schlauchaufnahme (3, 4) einsteckbaren Schlauch (6, 7) aufsteckbar und in eine Halteteilaufnahme (27, 28) des Manschettenteils (24) einsteckbar und vorzugsweise in dieser verrastbar ist, insbesondere wobei das Halteteil (25, 26) für jede Schlauchaufnahme (3, 4) separat oder einstückig für beide Schlauchaufnahmen (3, 4) ausgeführt ist und/oder zumindest teilweise die fluidische Verbindung (12) ausfüllt.

9. Fluidische Umlenkeinheit (1) nach Anspruch 8, **dadurch gekennzeichnet, dass** das Halteteil (25, 26) eine Aufnahmeöffnung (29, 30) für einen Schlauch (6, 7) aufweist und in Umfangsrichtung vollständig umschließt.

10. Fluidische Umlenkeinheit (1) nach einem der vorangehenden Ansprüche, **dadurch gekennzeichnet, dass** ein oder das vorzugsweise einstückig für beide Schlauchaufnahmen (3, 4) ausgeführte Dichtelement (10, 11), insbesondere in Form zweier miteinander verbundener Ringe (13, 14), bevorzugt benachbart zu einem oder dem Manschettenteil (24), in das Gehäuse (2) eingesetzt ist und zur außenseitigen Abdichtung zweier in die Schlauchaufnahmen (3, 4) einsteckbarer Schläuche (6, 7) ausgeführt ist.

11. Fluidische Umlenkeinheit (1) nach einem der vorangehenden Ansprüche, **dadurch gekennzeichnet, dass** ein Einlegeteil (31), bevorzugt benachbart zu einem oder dem Dichtelement (10, 11), in das Gehäuse (2) eingesetzt ist und eine ebene Auflagefläche (32) quer zur Richtung einer Längsachse (16, 17) einer Schlauchaufnahme (3, 4) an deren einer Gehäuseöffnung (33) abgewandten Seite (34) bildet, insbesondere wobei das Einlegeteil (31) für jede Schlauchaufnahme (3, 4) separat oder einstückig für beide Schlauchaufnahmen (3, 4) ausgeführt ist und/oder zumindest teilweise die fluidische Verbindung (12) ausfüllt.

12. Fluidische Umlenkeinheit (1) nach einem der vorangehenden Ansprüche, **dadurch gekennzeichnet, dass** ein Halteelement (35), bevorzugt bestehend aus wenigstens einem Zackenring (36, 37), an einem einer Gehäuseöffnung (33) abgewandten Seite (34) einer Schlauchaufnahme (3, 4) zum Fixieren eines in die Schlauchaufnahme (3, 4) einsteckbaren Schlauches (6, 7) ausgebildet ist, insbesondere wobei benachbart zu dem Halteelement (35) ein Widerlager (38) für das Haltelement (35) ausgebildet ist, bevorzugt in Form des Einlegeteils (31), insbesondere wobei das Halteelement (35) für jede Schlauchaufnahme (3, 4) separat oder einstückig für beide Schlauchaufnahmen (3, 4) ausgeführt ist und/oder zumindest teilweise die fluidische Verbindung (12) ausfüllt.

13. Fluidische Umlenkeinheit (1) nach einem der vorangehenden Ansprüche, **dadurch gekennzeichnet, dass** das Gehäuse (2) außenseitig wenigstens eine, bevorzugt drei, vorzugsweise quer zu einer Einsteckrichtung (39) eines Schlauches (6, 7) verlaufende Verstärkungsrippen (40) aufweist.

14. Fluidische Umlenkeinheit (1) nach einem der vorangehenden Ansprüche, **dadurch gekennzeichnet, dass** ein Füllvorsprung (45) ausgebildet, der zu dem Verbindungskanal (5) abragt, insbesondere so dass er einen Zwischenraum zwischen Enden der eingesteckten Schläuche (6, 7) zumindest teilweise ausfüllt.

15. Verwendung eines Schlauches (6, 7) zur Unterbrechung einer fluidischen Verbindung (12) in einer fluidischen Umlenkeinheit (1) nach einem der vorangehenden Ansprüche, wobei der Schlauch (6, 7) in eine Schlauchaufnahme (3, 4) eingesteckt wird, in die die fluidische Verbindung (12) mündet, insbesondere wobei der Verbindungskanal (5) weiterhin geöffnet ist.

## Claims

1. Fluidic deflection unit (1), in particular for use in the sanitary sector, comprising a housing (2), two tube receptacles (3, 4) and a connecting channel (5) fluidically connecting the tube receptacles (3, 4), wherein the tube receptacles (3, 4) are fluidically connected to one another beyond the connecting channel (5), in particular in at least one axial section (8), in particular wherein the tube receptacles (3, 4) on the one hand and the connecting channel (5) on the other hand are arranged such that they are separable by a plane (9), **characterized in that** a sealing element (10, 11) acting in both tube receptacles (3, 4) at least partially fills out the fluidic connection (12) and/or consists of two interconnected rings (13, 14).

2. Fluidic deflection unit (1) according to the preceding claim, **characterized in that** the fluidic deflection unit (1) has a one-piece housing (2).

3. Fluidic deflection unit (1) according to one of the preceding claims, **characterized in that** the tube receptacles (3, 4) are fluidically connected to one another over their entire course in the axial direction (15) and/or **in that** the or a fluidic connection (12) fluidically connecting the tube receptacles (3, 4) and the connecting channel (5) form a common interior space of the housing (2).

4. Fluidic deflection unit (1) according to one of the preceding claims, **characterized in that** respective longitudinal axes (16, 17) of the tube receptacles (3, 4) are aligned parallel, in particular congruently, to respective longitudinal axes (18, 19) of openings (20, 21) at the ends of the connecting channel (5).

5. Fluidic deflection unit (1) according to one of the preceding claims, **characterized in that** a collar part (24) is inserted into the housing (2), in particular into one or the tube receptacles (3, 4), and is designed for the axial guidance of a tube (6, 7) insertable into the tube receptacle (3, 4), in particular wherein the collar part (24) can be latched or is latched to the housing (2), in particular wherein the collar part (24) is designed separately for each tube receptacle (3, 4) or in one piece for both tube receptacles (3, 4) and/or at least partially fills out the fluidic connection (12).

6. Fluidic deflection unit (1) according to claim 5, **characterized in that** the collar part (24) has at least one latching lug (42), in particular at least one, preferably two opposing latching lugs (42) per tube receptacle (3, 4).

7. Fluidic deflection unit (1) according to claim 6, **characterized in that** the at least one latching lug (42) can interact with a suitably shaped receiving opening (43) of the housing (2) such that the collar part (24) can be latched to the housing (2).

8. Fluidic deflection unit (1) according to one of claims 5 to 7, **characterized in that** the collar part (24) comprises at least one holding part (25, 26), which holding part (25, 26) can be slipped onto a tube (6, 7) insertable into the tube receptacle (3, 4) and can be inserted into a holding part receptacle (27, 28) of the collar part (24) and preferably can be latched therein, in particular wherein the holding part (25, 26) is designed separately for each tube receptacle (3, 4) or in one piece for both tube receptacles (3, 4) and/or at least partially fills out the fluidic connection (12).

9. Fluidic deflection unit (1) according to claim 8, **characterized in that** the holding part (25, 26) has a receiving opening (29, 30) for a tube (6, 7) and completely encloses it in the circumferential direction.

10. Fluidic deflection unit (1) according to one of the preceding claims, **characterized in that** a or the sealing element (10, 11), preferably designed in one piece for both tube receptacles (3, 4), in particular in the form of two interconnected rings (13, 14), preferably adjacent to a or the collar part (24), is inserted into the housing (2) and is designed for the outside sealing of two tubes (6, 7) insertable into the tube receptacles (3, 4).

11. Fluidic deflection unit (1) according to one of the preceding claims, **characterized in that** an insert part (31), preferably adjacent to a or the sealing element (10, 11), is inserted into the housing (2) and forms a flat support surface (32) transverse to the direction of a longitudinal axis (16, 17) of a tube receptacle (3, 4) on its side (34) facing away from a housing opening (33), in particular wherein the insert part (31) is designed separately for each tube receptacle (3, 4) or in one piece for both tube receptacles (3, 4) and/or at least partially fills out the fluidic connection (12).

12. Fluidic deflection unit (1) according to one of the preceding claims, **characterized in that** a retaining element (35), preferably consisting of at least one pronged ring (36, 37), is formed on a side (34) of a tube receptacle (3, 4) facing away from a housing opening (33) for fixing a tube (6, 7) insertable into the tube receptacle (3, 4), in particular wherein an abutment (38) for the retaining element (35) is formed adjacent to the retaining element (35), preferably in the form of the insert part (31), in particular wherein the retaining element (35) is designed separately for each tube receptacle (3, 4) or in one piece for both tube receptacles (3, 4) and/or at least partially fills out the fluidic connection (12).

13. Fluidic deflection unit (1) according to one of the preceding claims, **characterized in that** the housing (2) has on the outside at least one reinforcement rib (40), preferably three reinforcement ribs (40), preferably extending transversely to an insertion direction (39) of a tube (6, 7).

14. Fluidic deflection unit (1) according to one of the preceding claims, **characterized in that** a filling projection (45) is formed which projects toward the connecting channel (5), in particular such that it at least partially fills out an intermediate space between ends of the inserted tubes (6, 7).

15. Use of a tube (6, 7) for interrupting a fluidic connection (12) in a fluidic deflection unit (1) according to one of the preceding claims, wherein the tube (6, 7) is inserted into a tube receptacle (3, 4) into which the fluidic connection (12) opens, in particular wherein the connecting channel (5) remains open.

## Revendications

1. Unité de déviation de fluide (1), utilisable en particulier dans le domaine sanitaire, avec un corps (2), deux réceptacles de tuyaux (3, 4) et un conduit de liaison (5) reliant les réceptacles de tuyaux (3, 4) en vue de la circulation de fluide, dans laquelle les réceptacles de tuyaux (3, 4), sont reliés entre eux en vue de la circulation de fluide, en particulier dans au moins une partie axiale (8), de l'autre côté du conduit de liaison (5), les réceptacles de tuyaux (3, 4) d'une part et le conduit de liaison (5) d'autre part étant en particulier disposés de façon à pouvoir être séparés par un plan (9), **caractérisée en ce qu'**un élément d'étanchéité (10, 11) agissant dans les deux réceptacles de tuyaux (3, 4) remplit au moins en partie la liaison de fluide (12) et/ou se compose de deux anneaux (13, 14) reliés l'un à l'autre.

2. Unité de déviation de fluide (1) selon la revendication précédente, **caractérisée en ce que** l'unité de déviation de fluide (1) présente un corps (2) d'une seule pièce.

3. Unité de déviation de fluide (1) selon l'une des revendications précédentes, **caractérisée en ce que** les réceptacles de tuyaux (3, 4) sont reliés entre eux en vue de la circulation de fluide sur toute leur étendue dans le sens axial (15) et/ou **en ce que** la ou une liaison de fluide (12) reliant les réceptacles de tuyaux (3, 4) en vue de la circulation de fluide et le conduit de liaison (5) forment un espace intérieur commun du corps (2).

4. Unité de déviation de fluide (1) selon l'une des revendications précédentes, **caractérisée en ce que** les axes longitudinaux respectifs (16, 17) des réceptacles de tuyaux (3, 4) sont orientés parallèlement, en particulier coïncident, avec les axes longitudinaux respectifs (18, 19) d'ouvertures (20, 21) aux extrémités du conduit de liaison (5).

5. Unité de déviation de fluide (1) selon l'une des revendications précédentes, **caractérisée en ce qu'**une partie formant manchon (24) est insérée dans le corps (2), en particulier dans un ou les réceptacles de tuyaux (3, 4), et réalisé en vue du guidage axial d'un tuyau (6, 7) pouvant être inséré dans le réceptacle de tuyau (3, 4), la partie formant manchon (24) pouvant être ou étant en particulier enclenchée dans le corps (2), la partie formant manchon (24) étant en particulier réalisée séparément pour chaque réceptacle de tuyau (3, 4) ou d'une pièce pour les deux réceptacles de tuyaux (3, 4) et/ou remplissant au moins partiellement la liaison de fluide (12).

6. Unité de déviation de fluide (1) selon la revendication 5, **caractérisée en ce que** la partie formant manchon (24) comporte au moins une came d'enclenchement (42), en particulier au moins une, de préférence deux cames d'enclenchement (42) qui se font face pour chaque réceptacle de tuyau (3, 4).

7. Unité de déviation de fluide (1) selon la revendication 6, **caractérisée en ce que** l'au moins une came d'enclenchement (42) peut agir avec une ouverture de logement (43) de forme adaptée du corps (2) de telle façon que la partie formant manchon (24) puisse être enclenchée avec le corps (2).

8. Unité de déviation de fluide (1) selon l'une des revendications 5 à 7, **caractérisée en ce que** la partie formant manchon (24) comprend au moins une partie de maintien (25, 26), laquelle partie de maintien (25, 26) peut être insérée sur un tuyau (6, 7) qui peut être inséré dans le réceptacle de tuyau (3, 4) et peut être insérée dans un réceptacle de partie de maintien (27, 28) de la partie formant manchon (24) et, de préférence, enclenchée dans celle-ci, la partie de maintien (25, 26) étant en particulier réalisée séparément pour chaque réceptacle de tuyau (3, 4) ou d'une pièce pour les deux réceptacles de tuyaux (3, 4) et/ou remplissant au moins en partie la liaison de fluide (12).

9. Unité de déviation de fluide (1) selon la revendication 8, **caractérisée en ce que** la partie de maintien (25, 26) présente une ouverture de logement (29, 30) pour un tuyau (6, 7) et l'entourant complètement dans le sens de la circonférence.

10. Unité de déviation de fluide (1) selon l'une des revendications précédentes, **caractérisée en ce qu'**un ou l'élément d'étanchéité (10, 11) réalisé de préférence d'une pièce pour les deux réceptacles de tuyaux (3, 4), prenant en particulier la forme de deux anneaux (13, 14) reliés l'un à l'autre, est de préférence inséré dans le corps (2) au voisinage d'une ou de la partie formant manchon (24) et réalisé en vue de l'étanchéité extérieure de deux tuyaux (6, 7) pouvant être insérés dans les réceptacles de tuyaux (3, 4).

11. Unité de déviation de fluide (1) selon l'une des revendications précédentes, **caractérisée en ce qu'**une partie d'insert (31), de préférence introduite au voisinage d'un ou de l'élément d'étanchéité (10, 11), est introduite dans le corps (2) et forme une surface d'appui plane (32) perpendiculairement au sens d'un axe longitudinal (16, 17) d'un réceptacle de tuyau (3, 4) sur le côté (34) de celui-ci tourné à l'opposé d'une ouverture du corps (33), la partie d'insert (31) étant en particulier réalisée séparément pour chaque réceptacle de tuyau (3, 4) ou d'une pièce pour les deux réceptacles de tuyaux (3, 4) et/ou remplissant au moins partiellement la liaison de fluide (12).

12. Unité de déviation de fluide (1) selon l'une des revendications précédentes, **caractérisée en ce qu'**un élément de maintien (35), composé de préférence d'au moins une bague dentelée (36, 37), est formé sur un côté (34) tourné à l'opposé d'une ouverture de corps (33) d'un réceptacle de tuyau (3, 4) afin de fixer un tuyau (6, 7) pouvant être inséré dans le réceptacle de tuyau (3, 4), un contre-appui (38) pour l'élément de maintien (35) étant en particulier formé au voisinage de l'élément de maintien (35) de préférence sous la forme de la pièce d'insert (31), l'élément de maintien (35) étant en particulier réalisé séparément pour chaque réceptacle de tuyau (3, 4) ou d'une pièce pour les deux réceptacles de tuyaux (3, 4) et/ou remplissant au moins partiellement la liaison de fluide (12).

13. Unité de déviation de fluide (1) selon l'une des revendications précédentes, **caractérisée en ce que** le corps (2) présente sur l'extérieur au moins une, de préférence trois nervures de renfort (40), orientées de préférence transversalement par rapport à un sens d'insertion (39) d'un tuyau (6, 7).

14. Unité de déviation de fluide (1) selon l'une des revendications précédentes, **caractérisée en ce qu'**est formée une saillie de remplissage (45) qui dépasse vers le conduit de liaison (5), en particulier de façon à remplir au moins partiellement un espace intermédiaire entre les extrémités des tuyaux (6, 7) insérés.

15. Utilisation d'un tuyau (6, 7) pour l'interruption d'une liaison de fluide (12) dans une unité de déviation de fluide (1) selon l'une des revendications précédentes, dans laquelle le tuyau (6, 7) est inséré dans un réceptacle de tuyau (3, 4) dans lequel débouche la liaison de fluide (12), le conduit de liaison (5) étant en particulier encore ouvert.
